# EUROPÄISCHE PATENTANMELDUNG

(11) **EP 1 334 889 A2**
(43) Veröffentlichungstag der Anmeldung: **13.08.2003**
(21) Anmeldenummer: 03002252.9
(22) Anmeldetag: 01.02.2003
(51) Int. Cl.: B60S 1/08

(54) **Wischvorrichtung für eine Scheibe eines Kraftfahrzeugs**

(30) Priorität: 08.02.2002 DE 10205255
(71) Anmelder: AUDI AG, 85045 Ingolstadt (DE)
(72) Erfinder: Hunger, Michael, 85045 Ingolstadt (DE); Steiner, Peter, Dr., 86529 Schrobenhausen (DE)
(74) Vertreter: Mader, Wilfried

(57) **Zusammenfassung**

Die vorliegende Erfindung betrifft eine Wischvorrichtung für eine Scheibe eines Kraftfahrzeugs, mit mindestens einem motorisch bewegbaren Wischer mit einem Wischblatt, dessen Wischlippe über eine Steuerungseinrichtung gesteuert in unterschiedliche Parkstellungen bewegbar ist, wobei die Steuerungseinrichtung (11) zum Bewegen des Wischers (2) für eine Änderung der Parkstellung der Wischlippe (7) in Abhängigkeit eines die Ruhezeit der Wischlippe (7) in der momentanen Stellung beschreibenden Informationssignals und wenigstens eines Informationssignals betreffend einen sich nachteilig auf die Lebensdauer der Wischlippe (7) auswirkenden Umgebungsparameters ausgebildet ist.

## Beschreibung

Die Erfindung betrifft eine Wischvorrichtung für eine Scheibe eines Kraftfahrzeugs, mit mindestens einem motorisch bewegbaren Wischer mit einem Wischblatt, dessen Wischlippe über eine Steuerungseinrichtung gesteuert in unterschiedliche Parkstellungen bewegbar ist.

Die Wisch- und Reinigungseigenschaften einer solchen Wischvorrichtung-gleich ob sie einen oder zwei über einen Antriebsmotor bewegbare Wischer aufweist - hängt entscheidend von den Eigenschaften und der Qualität der Wischlippe, die beim Wischen unmittelbar über die Scheibenoberfläche gleitet, ab. Das Wischblatt und die Wischlippe sind im Laufe der Zeit unterschiedlichsten Umweltbedingungen wie wechselnden Lichtverhältnissen, Wärme, Kälte und Feuchte ausgesetzt, was über die Zeit dazu führt, dass sich die Wischlippe länger anhaltend oder bleibend verformen kann bzw. dass sich die Materialeigenschaften ändern, das heißt, dass es im Laufe der Zeit auch zu einer leichten Verhärtung des Wischlippenmaterials kommen kann. Diese Änderungen der Wischlippe treten vor allem dann auf, wenn die Wischlippe relativ lange Zeit unverändert in ihrer Parkstellung verharrt. Um hier eine Verbesserung herbeizuführen ist es aus DE 197 33 426 A1 bekannt, in fest eingestellten zeitlichen Rhythmen die Parkstellung der Wischlippe zu ändern, sie also in eine entgegengesetzte Winkel- oder Kipplage zu bringen. Wenngleich sich durch dieses alternierende Umlegen der Wischlippe die sich negativ auswirkenden Umwelteinflüsse etwas kompensieren lassen, wird die rhythmische Parkstellenänderungen den realen Bedingungen jedoch nur ungenügend gerecht, so dass sich letztlich nur unwesentliche Verbesserungen damit erzielen lassen.

Der Erfindung liegt damit das Problem zugrunde, eine Wischvorrichtung anzugeben, die hier Abhilfe schafft.

Zur Lösung dieses Problems ist bei einer Wischvorrichtung der eingangs genannten Art erfindungsgemäß vorgesehen, dass die Steuerungseinrichtung zum Bewegen des Wischers für eine Änderung der Parkstellung der Wischlippe in Abhängigkeit eines die Ruhezeit der Wischlippe in der momentanen Stellung beschreibenden Informationssignals und wenigstens eines Informationssignals betreffend einen sich nachteilig auf die Lebensdauer der Wischlippe auswirkenden Umgebungsparameters ausgebildet ist.

Bei der erfindungsgemäßen Wischvorrichtung erfolgt die Änderung der Parkstellung in Abhängigkeit wenigstens zweier unterschiedlicher Informationssignale, nämlich zum einen eines die Ruhezeit der Wischlippe in der gegebenen Parkstellung beschreibenden Informationssignals, und wenigstens eines zweiten Informationssignals, das einen Umgebungsparameter, der sich nachteilig auf die spezifischen Eigenschaften der Wischlippe, also letztlich ihre Lebensdauer auswirkt, erfolgt. Es werden bei der erfindungsgemäßen Steuerung der Parkstellenänderung vorteilhaft also die nachteiligen und intensiven Umweltparameter selbst berücksichtigt und in Abhängigkeit mehrerer Informationssignale entschieden, ob und wann eine Parkstellenänderung erforderlich ist. Als Umgebungsparameter ist jedweder Parameter zu verstehen, der sich direkt oder indirekt auf die Lebensdauer der Wischlippe auswirkt. Hierzu zählen Umweltparameter ebenso wie Betriebsparameter des Fahrzeugs, worauf nachfolgend noch eingegangen wird.

Als ein Umgebungsparameter, in dessen Abhängigkeit zusammen mit der Ruhezeit eine Änderung erfolgen kann, kann beispielsweise die Außenlufttemperatur erfasst und als Informationssignal an die Steuerungseinrichtung gegeben werden. Je kälter die Temperatur ist, desto eher neigt das Material der Wischlippe zur Versprödung, so dass eine Parkstellenänderung frühzeitig erforderlich ist als bei hinreichend warmer Umgebung.

Als gegebenenfalls weiterer Parameter kann ferner die Dauer der Lichteinwirkung auf den Wischer, insbesondere die Dauer der Sonneneinstrahlung erfasst und als Informationssignal an die Steuerungseinrichtung gegeben werden. Als die Materialeigenschaften beeinflussender Parameter ist insbesondere die UV-Strahlungsbelastung anzuführen, die ebenfalls zu einer Änderung der Materialeigenschaft, insbesondere einem Verspröden führt. Wird also die Dauer der Lichteinwirkung bzw. beispielsweise direkt der UV-Strahlung erfasst, so kann beispielsweise im Sommer, wenn die Sonne für sehr lange Zeit scheint und mithin eine hohe Strahlungsbelastung gegeben ist, eine Änderung der Parkstellung wesentlich früher erfolgen als beispielsweise im Winter oder in der Übergangszeit, wenn eine relativ geringe Strahlungsbelastung gegeben ist.

Weiterhin kann als gegebenenfalls weiterer Umgebungsparameter der Feuchtezustand der Scheibe des Kraftfahrzeugs, insbesondere die Dauer einer Beregnung oder die Dauer des Vorhandenseins eines Feuchtigkeitsfilms auf der Scheibe erfasst und als Informationssignal an die Steuerungseinrichtung gegeben werden. Auch dieser Umgebungsparameter kann sich nachteilig auf die Eigenschaften, insbesondere die Materialeigenschaften der Wischlippe auswirken, so dass auch er als steuerungsrelevanter Parameter im Rahmen der Beurteilung verwendet werden kann.

Ein weiterer Umgebungsparameter neben den genannten Umweltparametern kann z.B. die über die Zeit aufgenommene Fahrtgeschwindigkeit (als ein Betriebsparameter des Fahrzeugs) sein, die ein Maß für die Auflage- oder Andrückkräfte des oder der Wischer auf die Scheibe ist.

Neben einer Steuerung auf Basis der Ruhezeit in der momentanen Parkstellung und eines der genannten Umgebungsparameter (Umgebungstemperatur, Lichteinwirkung, Feuchtezustand, Fahrtgeschwindigkeit) besteht natürlich auch die Möglichkeit, im Rahmen der Steuerung zwei oder alle der genannten Umgebungsparameter zusammen mit der Ruhezeit zu berücksichtigen, so dass die gesamte Steuerung noch spezifischer an die tatsächlichen Umgebungsbedingungen angepasst ist. Dies ist aufgrund der Kommunikationsvernetzung im Fahrzeug relativ einfach möglich.

Die Steuerungseinrichtung selbst kann bei einer aufgrund der gegebenen Informationssignale vorzunehmenden Änderung der Parkstellung zum Ändern der Parkstellung bei ausgeschalteter Zündung, bei eingeschalteter Zündung oder während des Fahrbetriebs ausgebildet sein. Im erstgenannten Fall wird also die Änderung auch dann vorgenommen, wenn das Fahrzeug steht. Erfolgt die Änderung bei eingeschalteter Zündung so kann beispielsweise dann, wenn die Zündung eingeschaltet wird und steuerungsseitig eine bereits zeitlich früher vorzunehmende Änderung ermittelt wurde, unmittelbar die Änderung eingeleitet werden, erfolgt die Änderung während des Fahrbetriebs gilt dies entsprechend.

Das Informationssignal über die Ruhezeit der Wischlippe wird zweckmäßigerweise von einem der Steuerungseinrichtung zugeordneten Zeitglied gegeben, das in der Steuerungseinrichtung integriert oder extern angeordnet und mit der Steuerungseinrichtung zweckmäßigerweise über einen fahrzeugseitigen Kommunikationsbus kommuniziert. In jedem Fall erfasst das Zeitglied den Moment, wenn der Wischer in die Park- oder Ruhestellung läuft, wodurch die Schlepplage der Wischlippe und damit ihre Ruhestellung erfasst wird. Die Zeit wird kontinuierlich erfasst, unabhängig vom Betriebszustand des Fahrzeugs, also auch im Ruhezustand. Ergibt nun die Auswertung des Ruhezeit-Informationssignals und des oder der weiteren Informationssignale betreffend die Umgebungsparameter, die ebenfalls kontinuierlich und unabhängig vom Betriebszustand des Fahrzeugs erfasst werden, dass eine Änderung angezeigt ist, wird diese von der Steuerungseinrichtung zum gegeben Zeitpunkt initiiert.

Das oder die einen Umgebungsparameter beschreibenden Informationssignale ihrerseits können von mit der Steuerungseinrichtung über einen fahrzeuginternen Kommunikationsbus kommunizierenden Messeinrichtungen an die Steuerungseinrichtung gegeben werden. Als eine solche Messeinrichtung kann z. B. ein bei vielen Fahrzeugen bereits serienmäßig vorgesehener Außentemperaturfühler verwendet werden. Weiterhin kann zur Erfassung des Feuchtezustands der Scheibe ein ebenfalls bei vielen Fahrzeugen bereits serienmäßig vorhandener Regensensor verwendet werden. Die Strahlungsbelastung kann z. B. über einen bei vielen Fahrzeugen ebenfalls häufig vorgesehenen Lichtsensor erfasst werden, über den normalerweise das automatische Zuschalten des Abblendlichts gesteuert wird. Sämtliche Messeinrichtungen hängen ohnehin in der Regel an einem fahrzeuginternen Kommunikationsbus, so dass die Informationssignale auf einfache Weise an die Steuerungseinrichtung gegeben werden können.

Neben der Wischvorrichtung betrifft die Erfindung ferner ein Verfahren zum Betrieb einer Wischvorrichtung für Scheiben eines Kraftfahrzeugs, wobei die Wischvorrichtung mindestens einen motorisch bewegbaren Wischer mit einem Wischblatt, dessen Wischlippe über eine Steuerungseinrichtung gesteuert in unterschiedliche Parkstellungen bewegbar ist, aufweist. Das erfindungsgemäße Verfahren zeichnet sich dadurch aus, dass der Steuerungseinrichtung ein die Ruhezeit der Wischlippe in der momentanen Stellung beschreibendes Informationssignal und wenigstens ein Informationssignal betreffend einen sich nachteilig auf die Lebensdauer der Wischlippe auswirkenden Umgebungsparameter gegeben werden, die von der Steuerungseinrichtung verarbeitet werden, wobei in Abhängigkeit des Verarbeitungsergebnisses die Änderung der Parkstellung erfolgt. Die Verarbeitung der Informationssignale und die Erstellung des Verarbeitungsergebnisses erfolgt zweckmäßigerweise unter Verwendung eines geeigneten Rechenalgorithmus, der die Informationssignale entsprechend analysiert, gewichtet etc. Als Umgebungsparameter können die Außenlufttemperatur und/oder die Dauer der Lichteinwirkung auf den Wischer, insbesondere die Dauer der Sonneneinstrahlung und/oder der Feuchtezustand der Scheibe des Kraftfahrzeugs, insbesondere die Dauer einer Beregnung und die Dauer des Vorhandenseins eines Feuchtigkeitsfilms auf der Scheibe erfasst und als Informationssignal an die Steuerungseinrichtung gegeben werden.

Weitere Vorteile, Merkmale und Einzelheiten der Erfindung ergeben sich aus dem im folgenden beschriebenen Ausführungsbeispiel sowie anhand der Zeichnungen. Dabei zeigen:
Fig. 1 eine Prinzipskizze einer erfindungsgemäßen Wischvorrichtung, und
Fig. 2 einen Wischer in zwei Positionen, in denen die Wischlippe unterschiedliche Parkstellungen einnimmt.

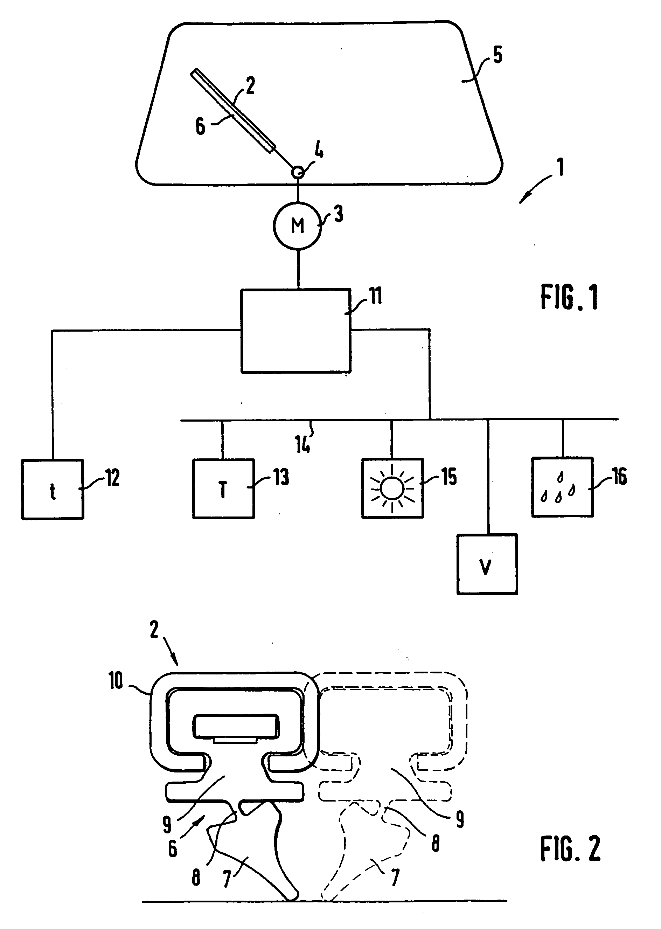

Fig. 1 zeigt eine erfindungsgemäße Wischvorrichtung 1 umfassend einen Wischer 2, der über einen Antriebsmotor 3 angetrieben um ein Drehlager 4 zum Bewegen über eine Scheibe 5 eines nicht näher gezeigten Kraftfahrzeugs bewegbar ist. Natürlich können auch zwei Motoren und/oder zwei Wischer vorgesehen sein. Der Wischer 2 weist ein Wischblatt 6 mit einer Wischlippe 7 auf, die über einen schmalen Steg 8 an einem Wischblattkörper 9 einstückig angeordnet und kippbar ist. Beim Bewegen des Wischers 2 über die Scheibe 5 wird die Wischlippe 7 entsprechend verkippt und geschleppt, so dass darauf befindliche Feuchtigkeit abgezogen werden kann. Das Wischblatt 6 selbst ist in einer Halterung 10 des Wischers 2 aufgenommen.

Die Steuerung der Bewegung des Wischers 2 - von dem im gezeigten Ausführungsbeispiel lediglich einer vorgesehen ist, selbstverständlich ist es aber auch denkbar, zwei benachbarte Wischer 2, die über einen gemeinsamen Motor 3 angetrieben werden, vorzusehen - erfolgt über eine Steuerungseinrichtung 11. Diese Steuerungseinrichtung 11 ist gemäß vorliegender Erfindung nicht nur zum Steuern des allgemeinen Wisch- und Reinigungsbetriebs der Wischvorrichtung 1 ausgebildet, sondern auch dazu, die Parkstellung des Wischers 2 bzw. der Wischlippe 7 im Bedarfsfall zu ändern. Zur Änderung der Parkstellung wird - siehe Fig. 2 - der Wischer 2 etwas (im gezeigten Beispiel gemäß Fig. 2 nach rechts) durch entsprechende Ansteuerung des Antriebsmotors 3 bewegt, was dazu führt, dass die Wischlippe 7 um den Verbindungssteg 8 herumkippt und in eine gegenüber der ursprünglichen Parkstellung entgegengesetzte Stellung bezüglich des Wischblattkörpers 9 gebracht wird. Die beiden unterschiedlichen Stellungen sind in Fig. 2 zum einen durchgezogen, zum anderen gestrichelt dargestellt.

Bei der erfindungsgemäßen Wischvorrichtung 1 erfolgt die Entscheidung, wann eine solche Änderung der Parkstellung vorzunehmen ist, durch gezielte Verarbeitung mehrerer unterschiedlicher Informationssignale. Zum einen wird über ein der Steuerungseinrichtung 11 zugeordnetes Zeitglied 12 die Zeit aufgenommen, während welcher der Wischer 2 und damit die Wischlippe 7 unbewegt und in der momentanen Parkstellung ruht. Dies kann beispielsweise durch Erfassung der Ruhezeit des Antriebsmotors 3 oder dergleichen erfolgen. Das Zeitglied 12, das in der Steuerungseinrichtung 11 integriert oder extern dazu sein kann, erzeugt ein entsprechendes Informationssignal, das der Steuerungseinrichtung 11 kontinuierlich gegeben wird.

Neben diesem die Ruhezeit beschreibenden Informationssignal werden im gezeigten Ausführungsbeispiel der Steuerungseinrichtung 11 weitere Informationssignale gegeben, die unterschiedliche Umgebungsparameter, die sich nachteilig auf die Eigenschaften und Lebensdauer der Wischlippe 7 auswirken können, beschreiben. Zum einen ist eine Messeinrichtung 13 vorgesehen, über die die Außentemperatur kontinuierlich oder zyklisch gemessen wird. Eine kontinuierliche Messung bedeutet, dass die Messung - wie auch die der Ruhezeit und der sonstigen Umgebungsparameter - unabhängig vom Betriebszustand des Fahrzeugs erfolgt, also unabhängig davon, ob dieses nun fährt und die Zündung eingeschalten ist oder nicht. Als eine solche Messeinrichtung kann z. B. ein üblicher Außentemperaturfühler, wie er bei vielen Fahrzeugen vorhanden ist, verwendet werden. Die kontinuierlich erfassten Informationssignale werden auf einen fahrzeugeigenen Kommunikationsbus 14 gegeben, an dem eine übliche Temperaturmesseinrichtung ohnehin hängt. Über diesen Kommunikationsbus, an dem ebenfalls die Steuerungseinrichtung 11 hängt, wird das Informationssignal an die Steuerungseinrichtung 11 gegeben.

Als zweite Messeinrichtung, mit der ein Umgebungsparameter aufgezeichnet wird, ist die Messeinrichtung 15 vorgesehen, über die die Dauer der Lichteinwirkung auf dem Wischer, insbesondere die Dauer der Sonneneinstrahlung und damit der UV-Strahlungsbelastung erfasst wird. Bei der Messeinrichtung 15 kann es sich beispielsweise um einen üblichen Lichtsensor, wie er ebenfalls häufig in Fahrzeugen zum Einsatz kommt, handeln. Auch das Informationssignal der Messeinrichtung 15 wird auf den Kommunikationsbus 14 und über diesen an die Steuerungseinrichtung 11 gegeben.

Schließlich ist eine dritte Messeinrichtung 16 vorgesehen, über die der Feuchtezustand auf der Scheibe kontinuierlich erfasst wird. Es kann sich hierbei beispielsweise um einen üblichen Regensensor, wie er ebenfalls häufig in Fahrzeugen eingesetzt wird, handeln. Auch sein Informationssignal wird kontinuierlich auf den Kommunikationsbus 14 und von dort an die Steuerungseinrichtung 11 gegeben.

Über eine weitere Messeinrichtung 17 wird die Fahrgeschwindigkeit des Fahrzeugs gemessen, die ein Maß für die Andrückkräfte ist, die die Wischlippe an die Scheibe drücken. Auch dieses Informationssignal wird auf den Kommunikationsbus 14 gegeben und von dort an die Steuerungseinrichtung. Gezeigt sind nur die vier Umgebungsparameter. Es können aber auch noch weitere erfasst und verarbeitet werden.

Seitens der Steuerungseinrichtung 11 werden nun sämtliche Informationssignale, die aufgrund der Vernetzung der Signalwege relativ einfach an der Steuerungseinrichtung zusammengeführt werden können, gemeinsam ausgewertet und zu einem Verarbeitungsergebnis analysierend aufbereitet. Abhängig von diesem Verarbeitungsergebnis, das unter Verwendung eines geeigneten Rechenalgorithmus, welcher die Informationssignale entsprechend analysiert und auswertet und gewichtet, erstellt wird, erfolgt dann steuerungsgeräteseitig die Entscheidung, ob eine Änderung der Parkstellung vorzunehmen ist oder nicht. Ergibt die Auswertung, dass die Parkstellung zu ändern ist, so erfolgt die bereits bezüglich Fig. 2 beschriebene kurze Ansteuerung des Antriebsmotors 3, wodurch der Wischer 2 etwas bewegt wird, so dass die Wischlippe in die andere Parkstellung kippt. Alle erfassten Parameter werden dann wieder zurückgesetzt, das heißt die Erfassung beginnt erneut. Sollten die Parameter eine nochmalige Stellungsänderung erfordern, so wird der Wischer nochmals kurz bewegt und die Wischlippe umgekippt.

Insgesamt kann mit der erfindungsgemäßen Wischvorrichtung eine Verlängerung der Lebensdauer eines Wischers erreicht werden, da den tatsächlichen Umwelteinflüssen bei der Entscheidung darüber, ob eine Änderung der Parkstellung vorzunehmen ist oder nicht, tatsächlich Rechnung getragen wird. Zum anderen kann eine Optimierung der Wisch- und Reinigungseigenschaften der Wischvorrichtung erreicht werden, da die negativen Einflüsse, die die Umweltparameter auf die Wischlippe haben, sehr gut erfasst und durch rechtzeitige Änderung der Parkstellung kompensiert werden können.

## Patentansprüche

1. Wischvorrichtung für eine Scheibe eines Kraftfahrzeugs, mit mindestens einem motorisch bewegbaren Wischer mit einem Wischblatt, dessen Wischlippe über eine Steuerungseinrichtung gesteuert in unterschiedliche Parkstellungen bewegbar ist,
**dadurch gekennzeichnet,**
**dass** die Steuerungseinrichtung (11) zum Bewegen des Wischers (2) für eine Änderung der Parkstellung der Wischlippe (7) in Abhängigkeit eines die Ruhezeit der Wischlippe (7) in der momentanen Stellung beschreibenden Informationssignals und wenigstens eines Informationssignals betreffend einen sich nachteilig auf die Lebensdauer der Wischlippe (7) auswirkenden Umgebungsparameters ausgebildet ist.

2. Wischvorrichtung nach Anspruch 1,
**dadurch gekennzeichnet,**
**dass** als Umgebungsparameter die Außenlüfttemperatur erfasst und als Informationssignal an die Steuerungseinrichtung (11) gegeben wird.

3. Wischvorrichtung nach Anspruch 1 oder 2,
**dadurch gekennzeichnet,**
**dass** als gegebenenfalls weiterer Umgebungsparameter die Dauer der Lichteinwirkung auf den Wischer (2), insbesondere die Dauer der Sonneneinstrahlung erfasst und als Informationssignal an die Steuerungseinrichtung (11) gegeben wird.

4. Wischvorrichtung nach einem der vorangehenden Ansprüche,
**dadurch gekennzeichnet,**
**dass** als gegebenenfalls weiterer Umgebungsparameter der Feuchtezustand der Scheibe (5) des Kraftfahrzeugs, insbesondere die Dauer einer Beregung oder die Dauer des Vorhandenseins eines Feuchtigkeitsfilms auf der Scheibe (5) erfasst und als Informationssignal an die Steuerungseinrichtung (11) gegeben wird.

5. Wischvorrichtung nach einem der vorangehenden Ansprüche,
**dadurch gekennzeichnet,**
**dass** als gegebenenfalls weiterer Umgebungsparameter die Fahrtgeschwindigkeit des Kraftfahrzeugs erfasst und als Informationssignal an die Steuerungseinrichtung (11) gegeben wird.

6. Wischvorrichtung nach einem der vorangehenden Ansprüche,
**dadurch gekennzeichnet,**
**dass** die Steuerungseinrichtung (11) bei einer aufgrund der gegebenen Informationssignale vorzunehmenden Änderung der Parkstellung zum Ändern der Parkstellung bei ausgeschalteter Zündung, bei eingeschalteter Zündung oder während des Fahrbetriebs des Kraftfahrzeugs ausgebildet ist.

7. Wischvorrichtung nach einem der vorangehenden Ansprüche,
**dadurch gekennzeichnet,**
**dass** das Informationssignal über die Ruhezeit der Wischlippe von einem der Steuerungseinrichtung (11) zugeordneten Zeitglied (12) gegeben wird.

8. Wischvorrichtung nach Anspruch 7,
**dadurch gekennzeichnet,**
**dass** das Zeitglied (12) in der Steuerungseinrichtung (11) integriert oder extern angeordnet und mit der Steuerungseinrichtung (11) über einen fahrzeugseitigen Kommunikationsbus kommuniziert.

9. Wischvorrichtung nach einem der vorangehenden Ansprüche,
**dadurch gekennzeichnet,**
**dass** das oder die einen Umgebungsparameter beschreibenden Informationssignale von mit der Steuerungseinrichtung (11) über einen fahrzeuginternen Kommunikationsbus (14 kommunizierenden Messeinrichtungen (13, 15, 16) an die Steuerungseinrichtung (11) gegeben werden.

10. Verfahren zum Betrieb einer Wischvorrichtung für Scheiben eines Kraftfahrzeugs, wobei die Wischvorrichtung mindestens einen motorisch bewegbaren Wischer mit einem Wischblatt, dessen Wischlippe über eine Steuerungseinrichtung gesteuert in unterschiedliche Parkstellungen bewegbar ist, aufweist,
**dadurch gekennzeichnet,**
**dass** der Steuerungseinrichtung ein die Ruhezeit der Wischlippe in der momentanen Stellung beschreibendes Informationssignal und wenigstens ein Informationssignal betreffend einen sich nachteilig auf die Lebensdauer der Wischlippe auswirkenden Umgebungsparameters gegeben werden, die von der Steuerungseinrichtung verarbeitet werden, und dass in Abhängigkeit des Verarbeitungsergebnisses die Änderung der Parkstellung erfolgt.

11. Verfahren nach Anspruch 10,
**dadurch gekennzeichnet, dass** die Verarbeitung der Informationssignale und die Erstellung des Verarbeitungsergebnisses unter Verwendung eines Rechenalgorithmus erfolgt.

12. Verfahren nach Anspruch 10 oder 11,
**dadurch gekennzeichnet,**
**dass** als Umgebungsparameter die Außenlufttemperatur und/oder die Dauer der Lichteinwirkung auf den Wischer, insbesondere die Dauer der Sonneneinstrahlung und/oder der Feuchtezustand der Scheibe des Kraftfahrzeugs, insbesondere die Dauer einer Beregung oder die Dauer des Vorhandenseins eines Feuchtigkeitsfilms auf der Scheibe und/oder die Fahrtgeschwindigkeit erfasst und als Informationssignal an die Steuerungseinrichtung gegeben wird.
